# EUROPEAN PATENT APPLICATION

(11) **EP 4 814 848 A1**
(43) Date of publication of application: **30.09.2026**
(21) Application number: 25166232.6
(22) Date of filing: 26.03.2025
(51) Int. Cl.: G06Q 30/0251

(54) **IN-VEHICLE MESSAGE OVERLAY CONTROL BASED ON DRIVER DEMAND AND MESSAGE IMPACT**

(71) Applicant: INTEL Corporation, Santa Clara, CA 95054 (US)
(72) Inventor: BUERKLE, Cornelius, Karlsruhe (DE); OBORIL, Fabian, 76139 Karlsruhe (DE)
(74) Representative: Viering, Jentschura & Partner mbB Patent- und Rechtsanwälte

(57) **Abstract**

Disclosed herein are devices, methods, and systems for controlling overlay messages on an output device (e.g., a display) of a vehicle. The apparatus is configured to determine a functional state of the vehicle, an environmental state of an environment in which the vehicle is located, and an operator state of an operator of the vehicle. The apparatus also generates a score (e.g., a demand score) based on the functional state, the environmental state, and the operator state, wherein the demand score represents an estimated extent of demand placed on the operator of the vehicle. The apparatus also controls an overlay visualization scheme based on the demand score, wherein the overlay visualization scheme defines parameters for a presentation of an overlay message on the output device of the vehicle.

## Description

### Background

As display screens and wireless connectivity have become a standard in today's vehicles, this has developed a marketplace for message overlays (e.g., pop-up messages) that are displayed to the user on one or more display screens in the vehicle. One typical usage of a message overlay is an advertisement that may be provided wirelessly (e.g., via a wireless protocol for receiving messages wirelessly) for displaying on a screen within the vehicle. Vehicle manufactures/suppliers may contract with advertisers and content owners to display advertisements as an overlay message within the vehicle, providing a potential income stream for the vehicle manufacturers/suppliers. Such overlay/pop-up messages have been used in internet browsing environments, where a user may need to watch an advertisement or click a close button before underlying content is displayed to the user. In the automobile context, however, such overlay messages may not only be annoying but may also cause a safety risk if the operator of the vehicle becomes distracted by or is required to interact with to the overlay message.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an example of an overlay visualization system that may control the overlay visualization scheme for the display of overlay messages within a vehicle;
FIG. 2 illustrates examples of how various example factors may impact the overall demand placed on the operator of a vehicle;
FIG. 3 provides an example of how an overlay message may obstruct or cover up content that is normally displayed;
FIGs. 4A and 4B show different examples of locations of an overlay message within a display, where the overlay message may cover up different portions of the main content with differing relevance;
FIG. 5 shows an example of overlay visualization system;
FIG. 6 illustrates an exemplary schematic drawing of an apparatus for controlling overlay visualization; and
FIG. 7 depicts an exemplary schematic flow diagram of a method for controlling overlay visualization.

### Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g.,* one, two, three, four, [...], etc., where "[...]" means that such a series may continue to any higher number). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two *(e.g.,* two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.,* provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.,* any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as radio frequency (RF) transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and "indirect" calculations via lookup or hash tables and other array indexing or searching operations.

As used herein, the terms "display," "monitor," "screen," etc. refer to a hardware device that illuminates in order to display a series of images or frames. The illumination may be direct (such as with a cathode ray tube (CRT) display, a liquid crystal (LCD) display, light-emitting diode (LED) display, etc.) or indirect (such as with a projector or other projection methods). These terms may also refer to subregions, subsegments, or subareas of a given displayable region such that a "display" may refer to a subregion therein.

A "vehicle" may be understood to include any type of driven object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, or a rocket, among others. As used herein, references to an "electric vehicle," "EV," and "hybrid vehicle" include any type of vehicle with an energy storage (e.g., a battery) that is capable of operating (e.g. propelling) the vehicle, irrespective of other sources of energy, if any, from which the vehicle may be alternatively or additionally operated (e.g., sources such as a combustion engine, solar panels, etc.).

The term "autonomous vehicle" may describe a vehicle capable of implementing at least one vehicle maneuver without driver input. A vehicle maneuver may describe or include a change in one or more of steering, braking, acceleration/deceleration, etc. of the vehicle. A vehicle may be described as autonomous even where the vehicle is not fully automatic (for example, is fully operational with driver input or without driver input). Autonomous vehicles may include those vehicles that can operate under driver control during certain time periods and without driver control during other time periods. Autonomous vehicles may also include vehicles that control only some aspects of vehicle navigation, such as steering (e.g., to maintain a vehicle course between vehicle lane constraints) or some steering operations under certain circumstances, but may leave other aspects of vehicle navigation to the driver during other circumstances (e.g., braking under certain circumstances). Autonomous vehicles may also include vehicles that share the control of one or more aspects of vehicle maneuver implementation/planning under certain circumstances (e.g., hands-on, such as responsive to a driver input) and vehicles that control one or more aspects of vehicle maneuvering under certain circumstances (e.g., hands-off, such as independent of driver input). Autonomous vehicles may also include vehicles that control one or more aspects of vehicle navigation under certain circumstances, such as under certain environmental conditions (e.g., spatial areas, roadway conditions). In some aspects, autonomous vehicles may handle some or all aspects of braking, speed control, velocity control, and/or steering of the vehicle.

An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

Various embodiments herein may utilize one or more machine learning models to perform functions of the vehicle (or other functions described herein). The term "model" as, for example, used herein may be understood as any kind of function or algorithm, which provides output data from input data. A machine learning model may be executed by a computing system to progressively improve performance of a specific task. In some aspects, parameters of a machine learning model may be adjusted during a training phase based on training data and a trained machine learning model may then be used during an inference phase to make predictions or decisions based on input data. In some aspects, the trained machine learning model may be used to generate additional training data and an additional machine learning model may be adjusted during a second training phase based on the generated additional training data. A trained additional machine learning model may then be used during an inference phase to make predictions or decisions based on input data.

The machine learning models described herein may take any suitable form or utilize any suitable techniques. For example, any of the machine learning models may utilize supervised learning, semi-supervised learning, unsupervised learning, or reinforcement learning techniques.

In supervised learning, the model may be built using a training set of data that contains both the inputs and corresponding desired outputs. Each training instance may include one or more inputs and a desired output. Training may include iterating through training instances and using an objective function to teach the model to predict the output for new inputs. In semi-supervised learning, a portion of the inputs in the training set may be missing the desired outputs.

In unsupervised learning, the model may be built from a set of data which contains only inputs and no desired outputs. The unsupervised model may be used to find structure in the data (e.g., grouping or clustering of data points) by discovering patterns in the data. Techniques that may be implemented in an unsupervised learning model include, e.g., self-organizing maps, nearest-neighbor mapping, k-means clustering, and singular value decomposition.

Reinforcement learning models may be given positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various embodiments described herein may utilize one or more classification models. In a classification model, the outputs may be restricted to a limited set of values. The classification model may output a class for an input set of one or more input values. An input set may include sensor data, such as image data, radar data, and the like. A classification model as described herein may for example classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various embodiments described herein may utilize one or more regression models. A regression model may output a numerical value from a continuous range based on an input set of one or more values. References herein to regression models may contemplate a model that implements, e.g., any one or more of the following techniques (or other suitable techniques): linear regression, decision trees, random forest, or neural networks.

A machine learning model described herein may be a neural network. The neural network may be any kind of neural network, such as a convolutional neural network, an autoencoder network, a variational autoencoder network, a sparse autoencoder network, a recurrent neural network, a deconvolutional network, a generative adversarial network, a forward thinking neural network or a sum-product neural network and the like. The neural network may include any number of layers and the training of the neural network, e.g. adapting the layers of the neural network, may be based on any kind of training principle, such as backpropagation, e.g. a backpropagation algorithm.

As noted earlier, overlay messages may be displayed on an in-vehicle display screen to communicate content (e.g., from an advertiser or other content provider). While this may offer a potential revenue stream to the automobile manufacturer/supplier, the overlay messages may cause a safety risk. For example, if the driver/operator of the vehicle becomes distracted by or is required to respond to the overlay message, the overlay message may take too much of the driver's attention from the important task of driving or the overlay message may cover important driving-related information such as speed, navigation, or camera views. Current overlay message schemes fail to consider the demands placed on the operator of the vehicle or the potential distractions caused by the overlay message to the operator and thus to vehicle safety. As discussed in more detail below, the disclosed overlay visualization circuit may control the placement of the overlay message based on the estimated attention demand on the operator for the current situation and/or based on the estimated extent of impact to the operator's driving attention (e.g., the intrusiveness of the overlay message with respect to the operator's attention to driving) by displaying the overlay message on a display screen within the vehicle.

Embodiments of the disclosed overlay visualization circuit may determine a demand score that characterizes the extent of attention demand placed on the driver/operator given the operator's current state, the demands of the environment, and the functional state of the vehicle. The overlay visualization circuit may control an overlay visualization scheme for overlaying the message on the display based on the demand score. The overlay visualization circuit may also control the overlay visualization scheme based on an estimated extent of impact to the operator of the vehicle caused by presenting the overlay message on a given display screen. In short, the overlay visualization circuit may estimate the risks for the vehicle, score the attention demands for the operator of the vehicle, estimate possible driver distraction associated with displaying the overlay message, and based on this context, control whether/which overlay message(s) may be displayed and in what manner. As a result, the overlay message(s) may be displayed in a manner that minimizes negative impacts to vehicle safety.

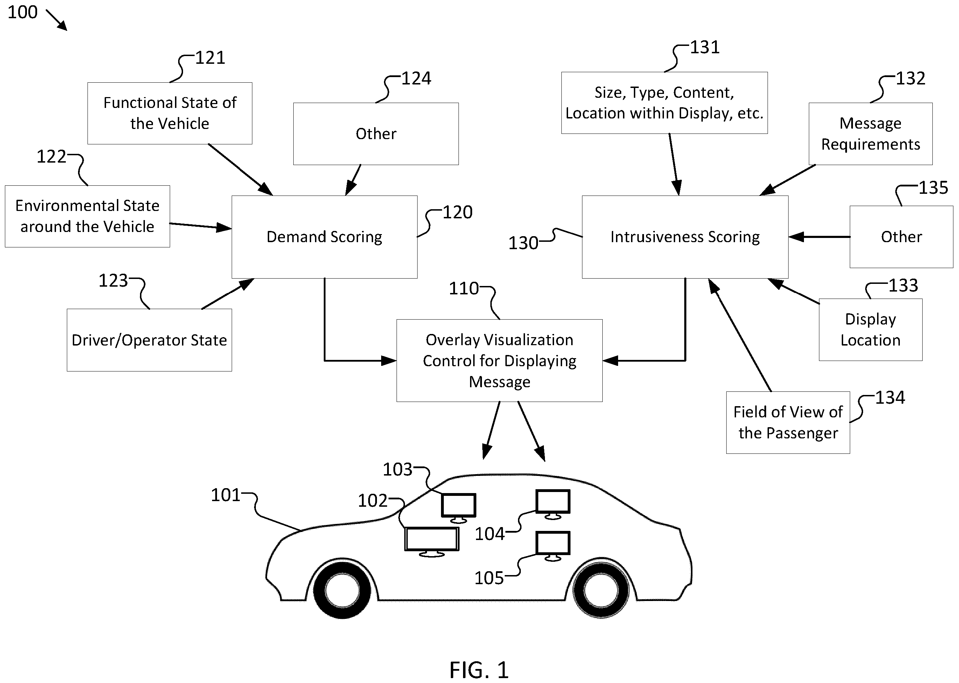

FIG. 1 depicts an example of an overlay visualization system 100 that may control the overlay visualization scheme for the display of overlay messages within, for example, vehicle 101. Vehicle 101 may include multiple visual display screens such as main dashboard panel 102, passenger/auxiliary display 103, left rear seat display 104, and right rear seat display 105. As should be appreciated, vehicle 101 may include any number of display screens (or display screen segments) in any number of locations throughout the vehicle that may be selected/identified for displaying an overlay message. An overlay visualization circuit 110 may control the display of overlay messages by, for example, determining which overlay messages may be displayed, on which display screen, and/or the properties/manner of displaying the overlay message. As used herein an overlay visualization scheme refers to the parameters used for presentation of an overlay message on the display of the vehicle, and thus the references below to the how, what, where, and in what manner an overlay message is display are all understood as being encompassed by an overlay visualization scheme. As should be understood, while examples herein are directed to visual displays, the concept of visualization need not be limited to graphical displays but rather may be extended to other output devices, such as audio devices, multimedia devices, etc., that are able to communicate messages and, in this sense, are able to "visualize" the overlay message. Thus, references herein to a display and displaying should be understood to encompass outputting messages to other types of message output devices and message formats beyond mere graphics.

The overlay visualization system 100 may include a demand scoring circuit 120 that may estimate the level of attention required by the operator/driver with respect to the current task. This may be understood as an estimate of the cognitive load (e.g., attention demand) on the driver/operator, and thus relates to an estimated risk that an accident may occur if the driver is distracted. In other words, the demand score may describe how demanding the current (or expected) driving situation is (or will be) for the driver and thus how much of the driver's attention is required for the current (or upcoming) task. The demand scoring circuit 120 may determine a demand score based on any number of aspects that may impact the demand for attentiveness on the operator/driver's given task.

For example, the demand scoring circuit 120 may receive information about the functional state of the vehicle 121 that may impact the attentiveness demand on the driver. Factors that may be considered include whether the vehicle is currently moving, the speed at which it is moving, whether the vehicle is stopped (e.g., at a stop light, at a crosswalk, etc.), whether the vehicle is parked at a charging station, a driving mode or level of operational autonomy of the vehicle (e.g., whether the car is in SAE level 0, 1, 2, 3, 4, 5, etc.), and/or any other type of operational information about the current or planned functional state of the vehicle.

As another example, the demand scoring circuit 120 may receive information about the environmental state of the vehicle 122 that may impact the attentiveness demand on the driver. Factors that may be considered include weather conditions of the area in which the vehicle is currently operating or where it is expect to be located; size, geometry, or conditions of the current road or of an upcoming road; the time of day; a traffic situation in which the vehicle is located or is expected to be located; a geographic location in which the vehicle is located or is expected to be located; a collision risk associated with the vehicle and/or any other type of information about the environment in which the vehicle is operating or expected to be operating.

As another example, the demand scoring circuit 120 may receive information about the driver/operator state 123 that relates to the driver/operator's attention level in the context of the task and environment. Information may include an estimated attention level of the operator to the current functional state of the vehicle (e.g., whether the driver is aware the care is moving again after being stopped at a crosswalk); an estimated stress level of the operator; an estimated fatigue of the operator; the level of familiarity of the driver to the current location, driving environment; or overall situation; or a driving profile of the operator (e.g., past actions in a historical profile or static information such as age, illnesses, habits, etc.).

As should be understood, any other type of information 124 that relates to the attention demand on the operator (and/or the attention capacity of the operator) for the given situation may be taken into account by the demand scoring circuit 120. In addition, while the various factors have been logically arranged into four groups (functional state, environmental state, operator state, and other) for ease of explanation, any type of grouping or no groupings may be used. As should also be understood, the information may be provided from on-vehicle or off-vehicle sensors (e.g., cameras, radars, Light Distance and Ranging (LiDAR) sensors, accelerometers, infrastructure devices, etc.), map/global positioning sensor data, etc. and may be predefined in or determined through learning a learning model that relates sensor data to attention demand. As should also be appreciated, any of the factors may be weighted by various weights so as to prioritize certain factors as more or less important than others. The factors may also be normalized to a value between zero and one so that they may be easily combined (e.g., in a formulaic manner).

For example, the overall demand score (*Rₜₒₜₐₗ*) may be given by the formula: ${R}_{total} = {α}_{1} {R}_{state} \times {α}_{2} {R}_{env} \times {α}_{3} {R}_{driver}$
where, *Rₛₜₐₜₑ* corresponds to the functional state discussed above, *Rₑₙᵥ* corresponds to the environmental state discussed above, and *R_{driver}* corresponds to operator/driver state discussed above, estimates of which may each be impacted by the various factors/examples provided above. The variables *α*₁, *α*₂, amd *α*₃ may represent the weight/importance placed on the corresponding state when determining the overall demand score (*Rₜₒₜₐₗ*), which may be normalized to a value between zero and one. In this sense, each of *Rₛₜₐₜₑ, Rₑₙᵥ,* and *R_{driver}* may be itself be expressed as a function of the various factors that impact the state. For example, *Rₑₙᵥ*, which represents the influence of the environmental state to the demand score, may include any of the factors discussed above, and as a couple of examples: ${R}_{env} = {R}_{traffic} \times {R}_{other env}$ ${R}_{env} = {R}_{call} \times f {\left(familarity\right)}^{- 1}$
where *R_{traffic}* represents the traffic density while *R_{other env}* represents other environmental factors that impact the overall impact of the environmental state to the demand score. Additionally or alternatively, the generalized collision risk associated with a given set of traffic conditions (R_{coll}) may be multiplied by the inverse of the driver's familiarity *f*(*familarity*)⁻¹ with the current situation to arrive at the overall impact of the environmental state to the demand score (e.g., the more familiar the driver is with respect to this traffic environment, the lower the risk of collision and therefore the lower impact the environmental state may have on the demand score.

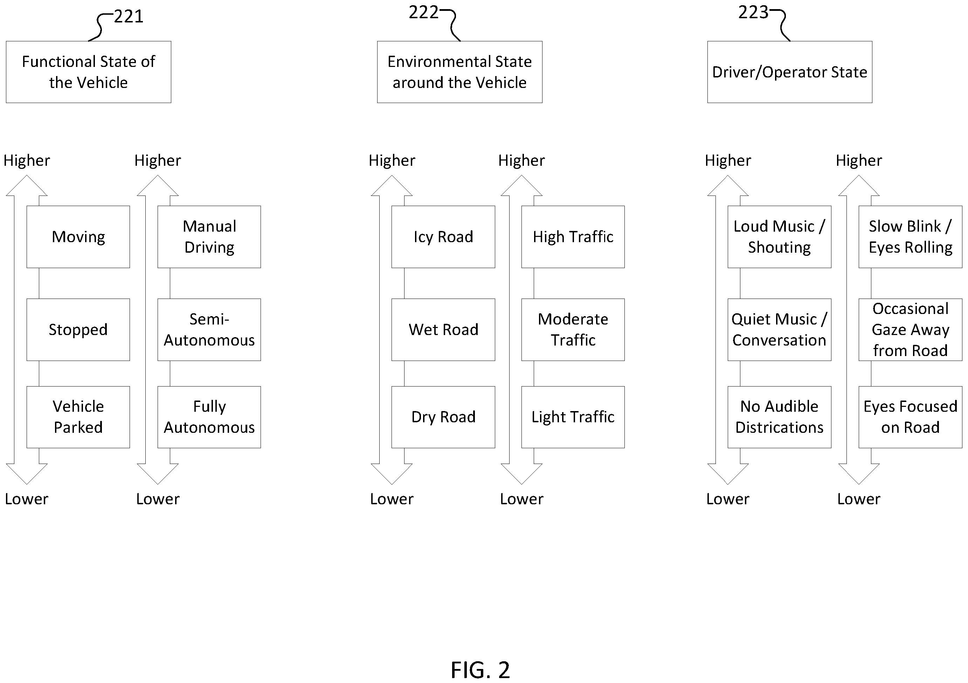

As should be understood, these are just a few examples, and any type of function may be used to relate the various factors to its impact on the overall demand state. FIG. 2, for example, shows a few examples of demand-related factors within each of the state categories discussed above, (e.g., functional state 221, environmental state 222, and diver/operator state 223) for determining demand score. With respect to functional state 221, a parked vehicle may have a lower (if not zero) impact to demand on the driver. On the other hand, a stopped vehicle (e.g., one that is waiting at a stop light or a crosswalk) may have a medium level of impact to demand and a moving vehicle may have a higher impact to demand. Another factor may be the SEA level or level of autonomy in which the vehicle is operating, where a fully autonomous vehicle may account for a lower (if not zero) impact on demand, a semi-autonomous mode may account for a medium impact to demand, and a manual driving mode may impact demand at a high level.

With respect to environmental state 222, a road condition factor may impact demand very low when the road is dry, mediumly when the road is wet, and very highly when the road is icy. Another environmental factor may be the traffic level or traffic situation, where a light traffic situation means that impact to demand may be low, a moderate traffic level means that impact to demand may be higher, and a high level of traffic may have a high level of impact to the demand on the driver. As noted above, the familiarity of the driver may have an inverse effect, meaning that even in a high traffic situation, the impact to the demand may be lowered because of the driver's familiarity with such situations. Or, in an unfamiliar situation, even a light traffic situation may have a higher impact on the driver's demand.

With respect to driver/operator state 223, in-cabin volume may be an example of one type of factor. When the in-cabin volume is low, this may have a lower impact on the driver's demand because the driver is able to focus on the driving task. When there is quiet music or moderate conversion, the impact to demand may be moderate if the driver is engaged in the conversation or singing along to the music. When there is loud music, shouting, or an intense conversation, the impact to demand may be very high because the driver is likely to be distracted. Another diver/operator state factor may be the gaze of the driver. If the driver's eyes are focused on the road ahead, this may lower the impact to driver demand. If the driver's eyes occasionally wander to watch the passing scenery, this may increase the impact to driver demand. The impact to driver demand may be very high if the driver's eyes blink more slowly than normal, are rolling back, or the eyelids are droopy. As should be understood from these examples, the demand score may be based on any number of factors that may increase or decrease the impact to driver demand and therefore the overall demand score.

Returning to FIG. 1, the overlay visualization system 100 may also include an intrusiveness scoring circuit 130 that may estimate the extent of intrusiveness to the operator/driver caused by presenting the overlay message. In other words, the intrusiveness score (or distraction score) may represent the extent to which the message overlay may distract the driver/operator of the vehicle from the driving task, where the intrusiveness score is based on information about the overlay message and the display on which the overlay message is to be presented. For example, the intrusiveness scoring circuit 130 may base the intrusiveness score on the format 131 in which the message overlay is to be presented, including factors such as size, duration, opacity, placement location within the display, and content (e.g., colorful vs. monotone content, text-only, still image, video, audio, etc.). As should be understood, larger, less opaque overlays may have a higher intrusiveness score while the smaller, more opaque overlays may have a lower the intrusiveness score. Similarly, overlay messages with active, flashy content, such as colorful images or videos, may have a higher the intrusiveness score while overlay messages with text-based content may have a lower intrusiveness score.

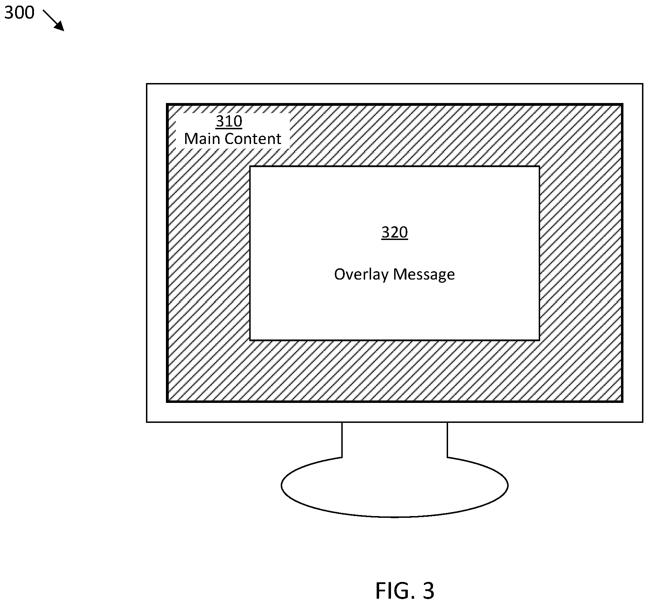

As part of this, intrusiveness scoring circuit 130 may also base the intrusiveness score on information that is to be covered up by the overlay message (e.g., the information or "main content" that would be normally displayed under the overlay message) and its importance to the operator's driving task. For context, an example is shown in FIG. 3 where display 300 normally displays main content 310. A portion of main content 310 has been covered by the presentation of overlay message 320. As should be appreciated, the size, duration, shape, and location within display 300 of overlay message 320 may be controlled by the overlay visualization system (e.g., overlay visualization system 100).

The information that is covered (e.g., main content 310) by the overlay message (e.g., overlay message 320) may have different levels of importance to the operator's driving task. For example, a back-up camera image that is displayed while the operator is reversing the vehicle may have a high level of importance to the reversing task. In such a case, the impact to the intrusiveness score would be very high if the back-up camera image were covered by an overlay message. Similar examples for high impact may be speed indicator or other "tell tale" warnings such as collision warnings. On the other hand, convenience information, such as information about the current radio channel (e.g., station number, volume level, and current song), climate control settings, or other vehicle settings may have a relatively low level of importance to the driving task and, as such, the impact to the intrusiveness score would be very low if the information about the current radio channel were covered. Information such as navigational displays (e.g., a map/route display), automation/automated driver settings, or other information that may relate to the driving task but that does not have a direct impact on vehicle safety may have a medium level of relevance and therefore a medium level of impact to the intrusiveness score.

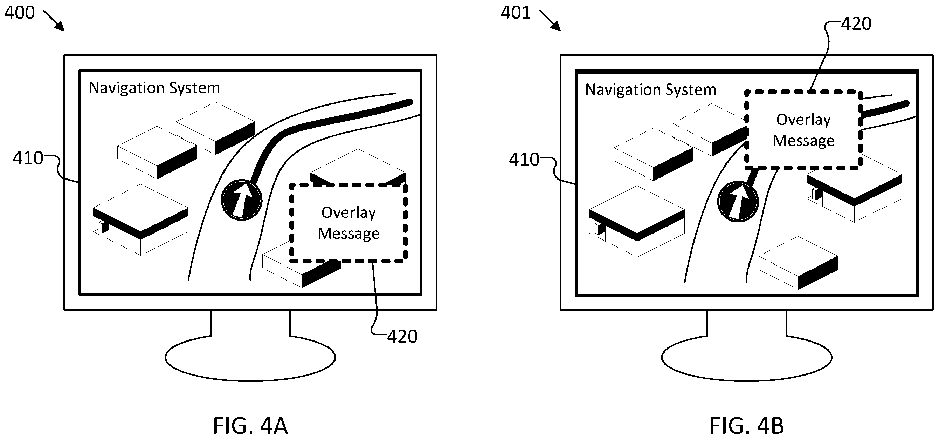

As should be appreciated the relevance/impact to the intrusiveness score of the information to be covered by the overlay message may depend on the current driving situation and may be specific to the particular location of the overlay message. In the case of a navigational display, for instance, its importance/relevance may increase as the vehicle approaches an impending curve/turn and may decrease as the vehicle moves along a long, straight stretch of road. In this sense, the relevance/importance may depend on the location of the overlay message within the display. An example of this may be seen by comparing FIGs. 4A and 4B, which show different visualization schemes 400 and 401, respectively, that present an overlay message 420 over different portions of the main content 410 of navigation display. As shown in FIG. 4A, the overlay message 420 is covering an area of the main content 410 that has lower relevance/impact because the navigation route is not covered and the vehicle has already passed this depicted location that is covered. By contrast, in FIG. 4B, the overlay message 420 is covering an area of the main content 410 that has higher relevance/impact because the upcoming route (a curve/turn) is covered by overlay message 420.

The intrusiveness scoring circuit 130 may also consider whether the overlay message will be within the field of view of the operator 134. For example, if the left rear seat display 105 or the right rear seat display 104 is used to display the overlay message, the overlay message is likely to be outside of the operator's field of view 134 and would have a low impact (or no impact) on the operator's attention and therefore a lower intrusiveness score. If the passenger/auxiliary display 103 will display the overlay message, the overlay message may be partially within the field of view of the operator and would therefore have a medium intrusiveness score. If the main dashboard panel 102 will display the overlay message, the overlay message is likely to be directly within the field of view of the operator, having the highest impact on the operator and therefore the highest intrusiveness score. Of course, the intrusiveness score may be based on other factors besides or in addition to field of view 134 such as the physical location of the display 133 with respect to the operator's physical location, the distance/separation between the display location 133 and the operator, or any other types of factors 135 that may influence extent of impact the overlay message is estimated to have on the operator/driver.

Like the demand score, the impact score may also be the result of any number of factors, each of which may be combined according to a relationship and weighed according to its relative impact on the intrusiveness/distraction to the operator. An example relationship is shown below, where the estimated intrusiveness score is *S_{distract}* is a function of relevance of the information covered by the overlay message (*S_{rel,info}*) and the relevance of the selected display (*S_{rel,info}*), which are multiplied by overlay message's impact potential for distracting (*P_{distract}*(*size,, opacity, content, etc*.)): ${S}_{distract} = h \left({S}_{rel , info}, {S}_{rel , disp}\right) \times {P}_{distract} \left.\left(size,opacity,content,etc.\right)\right)$

The intrusiveness score may then be related to the demand score discussed above to determine a set of presentation parameters that result in acceptable intrusiveness score for the current demand. The presentation parameters may relate to any factor that may have an impact on intrusiveness, such as those discussed above, including display location, physical size, duration, opacity, content/categorical type of message, whether sound is included, whether the message is static image or a video, whether the message is interactive, the relevance of the covered-up content, etc. For example, if both the intrusiveness score and the demand score are normalized to 1, the following relationship may define the acceptable presentation parameters for the overlay message given the demand score (*Rₜₒₜₐₗ*): ${S}_{distract} < 1 / {R}_{total}$

When this relationship holds true for a given set of presentation parameters, the message overlay may be presented according to the presentation parameters. For those parameters for which the relationship does not holds true, the overlay message may not be displayed in this manner. For example, if the vehicle is currently in a parked state, *Rₛₜₐₜₑ* may be zero such that *Rₜₒₜₐₗ =* 0. Consequently, any overlay message may be presented according to any presentation parameter. By contrast, if the driving mode is in manual mode, the driving conditions are extremely challenging, and the operator is tired/distracted and unfamiliar with this situation, *Rₜₒₜₐₗ* may be = 1 and thus certain overlay messages may be displayed using limited presentation parameters such as small overlays on rear-displays displays that are expected to be completely outside the field of view of the operator.

As should be understood, the left side of the relationship (*S_{distract}*) may be a matrix holding any number of (e.g., all possible) combinations of the multiple different presentation parameters available for a given overlay message (e.g., for different formats, different types, different sizes, difference durations, different relevance of the covered-up information, etc.), and only those entries that result in a total *S_{distract}* that falls below the acceptance criterion (< 1/*Rₜₒₜₐₗ*) may be safe to present within the vehicle. As should be understood, to reduce the complexity of ensuring that the acceptance criterion is met, the different presentation parameters available for a given overlay message may be pre-defined or pre-determined (e.g., a-priori) for various demand scores *Rₜₒₜₐₗ.* For example, given a total demand score, a maximum intrusiveness score allowed for a particular presentation region of the main dashboard display, the central infotainment screen, or a rear-seat passenger display may be pre-defined or pre-determined. Then, only those overlay messages (along with their given presentation parameters) that have a lower intrusiveness/distraction score may be selected for presentation.

As noted above, the overlay message may be received from a content owner that may pay to display the overlay message in the vehicle, and the overlay message may be understood as an advertisement . In such situations, the content provider may have message requirements 132 associated with the overlay message. Message requirements may relate to any of the factors and/or presentation parameters discussed above and examples may include minimum sizes, minimum durations, situational-based triggers (e.g., when navigating near a franchise location of the to-be-displayed add), etc. In this sense, the content owner's requirements may lead to a minimum intrusiveness (e.g., pervasiveness) for the overlay message that would be acceptable to the content owner (e.g., governed by an advertisement contract). The overlay visualization system (e.g., overlay visualization system 100 of FIG. 1) may use the message requirements 132 and based on their associated minimum level of intrusiveness along with the possible presentation parameters for display locations within the vehicle, each associated with a maximum level of intrusiveness allowed for the defined relationship between *S_{distract}* and 1/Rₜₒₜₐₗ, determine and control which messages may be placed at which time and according to what presentation parameters.

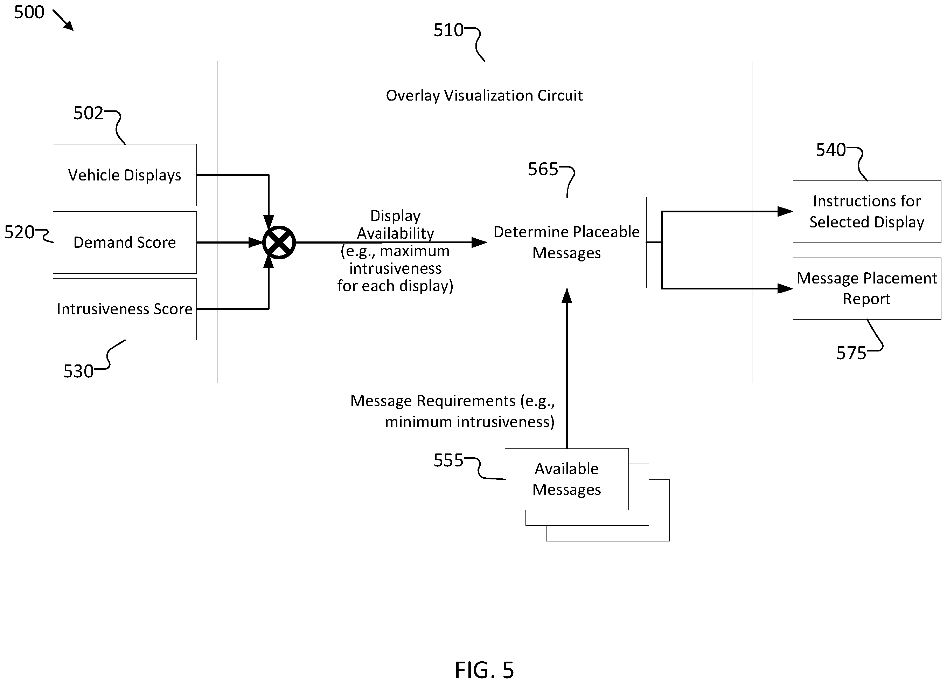

An example of this is shown in FIG. 5, which depicts overlay visualization system 500 for controlling overlay visualization. Overlay visualization circuit 510 may determine display availability based on the available vehicle displays 502, the demand score 520, and the intrusiveness score 530, which may yield a maximum level of intrusiveness associated with each display for the given demand score and the defined relationship between demand score 520 and intrusiveness score 530. The overlay visualization circuit 510 may determine placeable message(s) 565 for displaying in the vehicle from among the available messages 555 based on the message requirements such as a minimum level of intrusiveness (pervasiveness) from the content owner and based on the maximum level of intrusiveness determined for the given situation. The overlay visualization circuit 510 may then send control instructions 540 to present the selected overlay message with the appropriate presentation parameters. The overlay visualization circuit 510 may also log a message placement report 575 to track which messages have been displayed at which times (e.g., for showing compliance with content owner requirements and/or for monetizing the displayed messages.

As should be understood, the overlay visualization system 500 may also base the determination of which overlay message to display on the driver state, the functional state of the vehicle, and/or the environmental state. In this manner, the selection may be based on improve driving safety. For example, in a situation where the driver state indicates weariness or boredom (e.g., during long stretches of monotonous driving), the overlay visualization system 500 may select an invigorating overlay message (e.g., one with animation or other attention-rich aspect) so as to increase the driver's situational awareness. For example, an overlay for vehicle insurance may inspire a tired driver to remain alert. As should also be appreciated, the overlay visualization systems awareness of the driver state, the functional state, and/or the environmental state may also allow dynamic pricing for overlay message placement. For example, as the driver state is estimated to be more tired, overlay messages that advertise coffee may increase in price. Or, as the functional state indicates that the fuel tank is full or the battery is at full capacity, and fueling or charging advertisement overlay message may decrease in price.

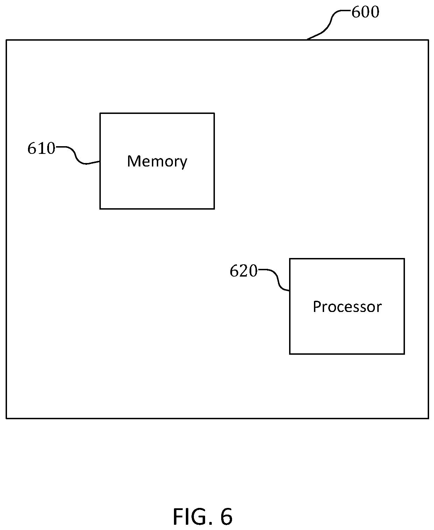

FIG. 6 depicts an apparatus for controlling overlay visualization that may include any of the features described above with respect to the overlay visualization system discussed above, including with the respect to FIGs. 1-5. FIG. 6 may be implemented as an apparatus, a device, a system, a method, and/or a computer readable medium that, when executed, performs the features of the sensing systems described above. It should be understood apparatus 600 is only an example, and other configurations may be possible that include, for example, different components or additional components.

Apparatus 600 is for controlling overlay message on an output device (e.g., a display) of a vehicle. Apparatus includes a memory 610 including instructions stored thereon. Apparatus 600 also includes a processor 620 that, based on execution of the instructions stored in memory 610, is configured to: determine a functional state of the vehicle; determine an environmental state of an environment in which the vehicle is located; determine an operator state of an operator of the vehicle; generate a demand score based on the functional state, the environmental state, and the operator state, wherein the demand score represents an estimated extent of demand placed on the operator of the vehicle; and control an overlay visualization scheme based on the demand score, wherein the overlay visualization scheme defines parameters for a presentation of an overlay message on the display of the vehicle. The processor 620 configured to control the overlay visualization scheme may include the processor 620 configured to determine the overlay visualization scheme based on the demand score.

Furthermore, in addition to or in combination with any of the features described in this or the preceding paragraph with respect to apparatus 600, the overlay visualization scheme is further based on an estimated extent of intrusiveness to the operator of the vehicle by the presentation of the overlay message on the display within the vehicle (e.g., an intrusiveness score). Furthermore, in addition to or in combination with any of the features described in this or the preceding paragraph, processor 620 may be configured to determine the estimated extent of intrusiveness (the intrusiveness score) based on a location of the display within vehicle. Furthermore, in addition to or in combination with any of the features described in this or the preceding paragraph, processor 620 may be configured to determine the estimated extent of intrusiveness (the intrusiveness score) based on an amount of separation between the operator and the display. Furthermore, in addition to or in combination with any of the features described in this or the preceding paragraph, processor 620 may be configured to determine the estimated extent of intrusiveness (the intrusiveness score) based on a size parameter of the overlay visualization scheme for the presentation of the overlay message as compared to a size of the display. Furthermore, in addition to or in combination with any of the features described in this or the preceding paragraph, processor 620 may be configured to determine the estimated extent of intrusiveness (the intrusiveness score) based on a duration of the presentation of the overlay message.

Furthermore, in addition to or in combination with any of the features described in this or the preceding two paragraphs with respect to apparatus 600, processor 620 may be configured to determine the estimated extent of intrusiveness (the intrusiveness score) based on a location parameter of the overlay visualization scheme, wherein the location parameter indicates where the presentation of the overlay message is located within the display. Furthermore, in addition to or in combination with any of the features described in this or the preceding two paragraphs, processor 620 may be configured to determine the estimated extent of intrusiveness (the intrusiveness score) based on a coverage parameter of the overlay visualization scheme, wherein the coverage parameter indicates what other content of the display is to be covered by the presentation of the overlay message or to what extent the other content is to be covered by the presentation of the overlay message. Furthermore, in addition to or in combination with any of the features described in this or the preceding two paragraphs, processor 620 may be configured to determine the estimated extent of intrusiveness (the intrusiveness score) based on an extent to which the overlay message is to be within a field of view of the operator.

Furthermore, in addition to or in combination with any of the features described in this or the preceding three paragraphs with respect to apparatus 600, processor 620 may be configured to determine the estimated extent of intrusiveness (the intrusiveness score) based on a coverage parameter of the overlay visualization scheme, wherein the coverage parameter indicates a physical extent of coverage by the overlay message of other content of the display or indicates an extent of importance of the other content covered by the overlay message. Furthermore, in addition to or in combination with any of the features described in this or the preceding three paragraphs, processor 620 may be configured to determine the parameters for the presentation of the overlay message based on a matrix of possible combinations of the parameters and their corresponding estimated intrusiveness. Furthermore, in addition to or in combination with any of the features described in this or the preceding three paragraphs, processor 620 may be configured to determine the parameters for the presentation of the overlay message based on whether the corresponding estimated intrusiveness satisfies a predefined criterion.

Furthermore, in addition to or in combination with any of the features described in this or the preceding four paragraphs with respect to apparatus 600, the matrix of possible combinations may be a predefined matrix of parameter combinations. Furthermore, in addition to or in combination with any of the features described in this or the preceding four paragraphs, the predefined criterion includes an acceptable threshold level for the estimated extent of intrusiveness (the intrusiveness score). Furthermore, in addition to or in combination with any of the features described in this or the preceding four paragraphs, processor 620 may be further configured to determine the parameters based on a presentation criterion for the presentation of the overlay message. Furthermore, in addition to or in combination with any of the features described in this or the preceding four paragraphs, the presentation criterion includes a requirement of a content owner of the overlay message for the presentation of the overlay message. Furthermore, in addition to or in combination with any of the features described in this or the preceding four paragraphs, the overlay message may include an advertisement from the content owner.

Furthermore, in addition to or in combination with any of the features described in this or the preceding five paragraphs with respect to apparatus 600, the overlay message may be an advertisement. Furthermore, in addition to or in combination with any of the features described in this or the preceding five paragraphs, the parameters for the presentation of the overlay message may include at least one of a categorical type of the overlay message, a type of content in the overlay message, a physical size of the overlay message, a duration of the overlay message, an opacity of the overlay message, a location within the display of the overlay message, or a sound profile associated with the overlay message. Furthermore, in addition to or in combination with any of the features described in this or the preceding five paragraphs, the type of content in the overlay message may include at least one of a text, a video, a static image, or an audio of the overlay message. Furthermore, in addition to or in combination with any of the features described in this or the preceding five paragraphs, the functional state may include at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Furthermore, in addition to or in combination with any of the features described in this or the preceding six paragraphs with respect to apparatus 600, the operator state may include at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.). Furthermore, in addition to or in combination with any of the features described in this or the preceding six paragraphs, the environmental state may include a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Furthermore, in addition to or in combination with any of the features described in this or the preceding seven paragraphs with respect to apparatus 600, processor 620 may be configured to generate the demand score based on a normalization of the functional state, the environmental state, or the operator state to a value between zero to one. Furthermore, in addition to or in combination with any of the features described in this or the preceding seven paragraphs, processor 620 may be configured to generate the demand score based on a weighting of at least one of the functional state, the environmental state, or the operator state. Furthermore, in addition to or in combination with any of the features described in this or the preceding seven paragraphs, processor 620 may be configured to generate the demand score based on a relationship defined by a first weight multiplied by the functional state plus a second weight multiplied by the environmental state plus a third weight multiplied by the operator state.

Furthermore, in addition to or in combination with any of the features described in this or the preceding eight paragraphs with respect to apparatus 600, the estimated extent of demand placed on an operator of the vehicle may include a cognitive load on operator due to the functional state of the vehicle, the environment in which the vehicle is located, or the operator state. Furthermore, in addition to or in combination with any of the features described in this or the preceding eight paragraphs, the estimated extent of demand placed on an operator of the vehicle is further based on a familiarity of the operator with the environment.

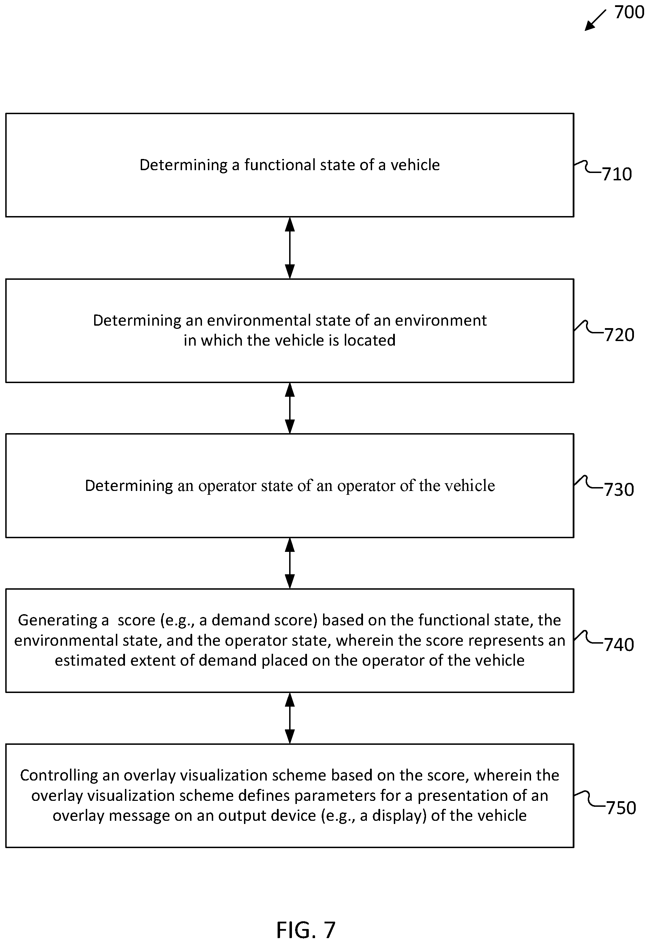

FIG. 7 depicts a schematic flow diagram of a method 600 for controlling overlay visualization. Method 700 may implement any of the features discussed above with respect to overlay visualization and/or FIGs. 1-6. Method 700 includes, in 710, determining a functional state of a vehicle. Method 700 also includes, in 720, determining an environmental state of an environment in which the vehicle is located. Method 700 also includes, in 730, determining an operator state of an operator of the vehicle. Method 700 also includes, in 740, generating a demand score based on the functional state, the environmental state, and the operator state, wherein the demand score represents an estimated extent of demand placed on the operator of the vehicle. Method 700 also includes, in 750, controlling an overlay visualization scheme based on the demand score, wherein the overlay visualization scheme defines parameters for a presentation of an overlay message on the display of the vehicle.

In the following, various examples are provided that may include one or more aspects described above with reference to overlay visualization and/or any of FIGs. 1-7. The examples provided in relation to the devices may apply also to the described method(s), and vice versa.

Example 1 is an apparatus for controlling overlay messages on an output device (e.g., a display device, an audio device, a multimedia device, etc.) of a vehicle. The apparatus includes a memory including instructions stored thereon. The apparatus also includes a processor that, based on execution of the instructions, is configured to determine a functional state of the vehicle; determine an environmental state of an environment in which the vehicle is located; determine an operator state of an operator of the vehicle; generate a score (also called a demand score) based on the functional state, the environmental state, and the operator state, wherein the score represents an estimated extent of demand placed on the operator of the vehicle; and control an overlay visualization scheme based on the score, wherein the overlay visualization scheme defines parameters for a presentation of an overlay message on the output device of the vehicle.

Example 2 is the apparatus of example 1, wherein the overlay visualization scheme is further based on an estimated extent of intrusiveness to the operator of the vehicle by the presentation of the overlay message on the output device within the vehicle (e.g., an intrusiveness score).

Example 3 is the apparatus of example 2, wherein the processor is configured to determine the estimated extent of intrusiveness (the intrusiveness score) based on a location of the output device within vehicle.

Example 4 is the apparatus of any one of examples 2 to 3, wherein the processor is configured to determine the estimated extent of intrusiveness (the intrusiveness score) based on an amount of separation between the operator and the output device.

Example 5 is the apparatus of any one of examples 2 to 4, wherein the processor is configured to determine the estimated extent of intrusiveness (the intrusiveness score) based on a size parameter of the overlay visualization scheme for the presentation of the overlay message as compared to a size of the output device.

Example 6 is the apparatus of any one of examples 2 to 5, wherein the output device is a display, wherein the processor is configured to determine the estimated extent of intrusiveness (the intrusiveness score) based on a location parameter of the overlay visualization scheme, wherein the location parameter indicates where the presentation of the overlay message is located within the display.

Example 7 is the apparatus of any one of examples 2 to 6, wherein the processor is configured to determine the estimated extent of intrusiveness (the intrusiveness score) based on a coverage parameter of the overlay visualization scheme, wherein the coverage parameter indicates what other content of the output device is to be covered by the presentation of the overlay message or to what extent the other content is to be covered by the presentation of the overlay message.

Example 8 is the apparatus of any one of examples 2 to 7, wherein the processor is configured to determine the estimated extent of intrusiveness (the intrusiveness score) based on an extent to which the overlay message is to be within a field of view of the operator.

Example 9 is the apparatus of any one of examples 2 to 8, wherein the output device comprises a display, wherein the processor is configured to determine the estimated extent of intrusiveness (the intrusiveness score) based on a coverage parameter of the overlay visualization scheme, wherein the coverage parameter indicates a physical extent of coverage by the overlay message of other content of the output device or indicates an extent of importance of the other content covered by the overlay message.

Example 10 is the apparatus of any one of examples 2 to 9, wherein the processor is further configured to determine the parameters for the presentation of the overlay message based on a matrix of possible combinations of the parameters and their corresponding estimated intrusiveness.

Example 11 is the apparatus of example 10, wherein the processor is further configured to determine the parameters for the presentation of the overlay message based on whether the corresponding estimated intrusiveness satisfies a predefined criterion.

Example 12 is the apparatus of any one of examples 10 to 11, wherein the matrix of possible combinations is a predefined matrix of parameter combinations.

Example 13 is the apparatus of any one of examples 2 to 12, wherein the predefined criterion includes an acceptable threshold level for the estimated extent of intrusiveness (the intrusiveness score).

Example 14 is the apparatus of any one of examples 2 to 13, wherein the processor is further configured to determine the parameters based on a presentation criterion for the presentation of the overlay message.

Example 15 is the apparatus of example 14, wherein the presentation criterion includes a requirement of a content owner of the overlay message for the presentation of the overlay message.

Example 16 is the apparatus of example 15, wherein the overlay message includes an advertisement from the content owner.

Example 17 is the apparatus of any one of examples 2 to 16, wherein the processor is further configured to determine the parameters based on a duration of the presentation of the overlay message.

Example 18 is the apparatus of any one of examples 1 to 17, wherein the overlay message includes an advertisement.

Example 19 is the apparatus of any one of examples 1 to 18, wherein the parameters for the presentation of the overlay message include at least one of a categorical type of the overlay message, a type of content in the overlay message, a physical size of the overlay message, an opacity of the overlay message, a location within the output device of the overlay message, or a sound profile associated with the overlay message.

Example 20 is the apparatus of example 19, wherein the type of content in the overlay message includes at least one of a text, a video, a static image, or an audio of the overlay message.

Example 21 is the apparatus of any one of examples 1 to 20, wherein the functional state includes at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Example 22 is the apparatus of any one of examples 1 to 21, wherein the operator state includes at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.).

Example 23 is the apparatus of any one of examples 1 to 22, wherein the environmental state includes a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Example 24 is the apparatus of any one of examples 1 to 23, wherein the processor is configured to generate the score based on a normalization of the functional state, the environmental state, or the operator state to a value between zero to one.

Example 25 is the apparatus of any one of examples 1 to 24, wherein the processor is configured to generate the score based on a weighting of at least one of the functional state, the environmental state, or the operator state.

Example 26 is the apparatus of example 25, wherein the processor is configured to generate the score based on a relationship defined by a first weight multiplied by the functional state plus a second weight multiplied by the environmental state plus a third weight multiplied by the operator state.

Example 27 is the apparatus of any one of examples 1 to 26, wherein the estimated extent of demand placed on an operator of the vehicle includes a cognitive load on operator due to the functional state of the vehicle, the environment in which the vehicle is located, or the operator state.

Example 28 is the apparatus of any one of examples 1 to 27, wherein the estimated extent of demand placed on an operator of the vehicle is further based on a familiarity of the operator with the environment.

Example 29 is a method for controlling overlay messages on a display of a vehicle. The method includes determining a functional state of the vehicle. The method also includes determining an environmental state of an environment in which the vehicle is located. The method also includes determining an operator state of an operator of the vehicle. The method also includes generating a demand score based on the functional state, the environmental state, and the operator state, wherein the demand score represents an estimated extent of demand placed on the operator of the vehicle. The method also includes controlling an overlay visualization scheme based on the demand score, wherein the overlay visualization scheme defines parameters for a presentation of an overlay message on the display of the vehicle.

Example 30 is the method of example 29, wherein the overlay visualization scheme is further based on an estimated extent of intrusiveness to the operator of the vehicle by the presentation of the overlay message on the display within the vehicle.

Example 31 is the method of example 30, the method further including determining the estimated extent of intrusiveness (the intrusiveness score) based on a location of the display within vehicle.

Example 32 is the method of any one of examples 30 to 31, the method further including determining the estimated extent of intrusiveness (the intrusiveness score) based on an amount of separation between the operator and the display.

Example 33 is the method of any one of examples 30 to 32, the method further including determining the estimated extent of intrusiveness (the intrusiveness score) based on a size parameter of the overlay visualization scheme for the presentation of the overlay message as compared to a size of the display.

Example 34 is the method of any one of examples 30 to 33, the method further including determining the estimated extent of intrusiveness (the intrusiveness score) based on a location parameter of the overlay visualization scheme, wherein the location parameter indicates where the presentation of the overlay message is located within the display.

Example 35 is the method of any one of examples 30 to 34, the method further including determining the estimated extent of intrusiveness (the intrusiveness score) based on a coverage parameter of the overlay visualization scheme, wherein the coverage parameter indicates what other content of the display is to be covered by the presentation of the overlay message or to what extent the other content is to be covered by the presentation of the overlay message.

Example 36 is the method of any one of examples 30 to 35, the method further including determining the estimated extent of intrusiveness (the intrusiveness score) based on an extent to which the overlay message is to be within a field of view of the operator.

Example 37 is the method of any one of examples 30 to 36, the method further including determining the estimated extent of intrusiveness (the intrusiveness score) based on a coverage parameter of the overlay visualization scheme, wherein the coverage parameter indicates a physical extent of coverage by the overlay message of other content of the display or indicates an extent of importance of the other content covered by the overlay message.

Example 38 is the method of any one of examples 30 to 37, the method further including determining the parameters for the presentation of the overlay message based on a matrix of possible combinations of the parameters and their corresponding estimated intrusiveness.

Example 39 is the method of example 38, the method further including determining the parameters for the presentation of the overlay message based on whether the corresponding estimated intrusiveness satisfies a predefined criterion.

Example 40 is the method of any one of examples 38 to 39, wherein the matrix of possible combinations is a predefined matrix of parameter combinations.

Example 41 is the method of any one of examples 30 to 40, wherein the predefined criterion includes an acceptable threshold level for the estimated extent of intrusiveness (the intrusiveness score).

Example 42 is the method of any one of examples 30 to 41, the method further including determining the parameters based on a presentation criterion for the presentation of the overlay message.

Example 43 is the method of example 42, wherein the presentation criterion includes a requirement of a content owner of the overlay message for the presentation of the overlay message.

Example 44 is the method of example 43, wherein the overlay message includes an advertisement from the content owner.

Example 45 is the method of any one of examples 30 to 44, the method further including determining the parameters based on a duration of the presentation of the overlay message.

Example 46 is the method of any one of examples 29 to 45, wherein the overlay message includes an advertisement.

Example 47 is the method of any one of examples 29 to 46, wherein the parameters for the presentation of the overlay message include at least one of a categorical type of the overlay message, a type of content in the overlay message, a physical size of the overlay message, an opacity of the overlay message, a location within the display of the overlay message, or a sound profile associated with the overlay message.

Example 48 is the method of example 47, wherein the type of content in the overlay message includes at least one of a text, a video, a static image, or an audio of the overlay message.

Example 49 is the method of any one of examples 29 to 48, wherein the functional state includes at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Example 50 is the method of any one of examples 29 to 49, wherein the operator state includes at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.).

Example 51 is the method of any one of examples 29 to 50, wherein the environmental state includes a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Example 52 is the method of any one of examples 29 to 51, the method further including generating the demand score based on a normalization of the functional state, the environmental state, or the operator state to a value between zero to one.

Example 53 is the method of any one of examples 29 to 52, the method further including generating the demand score based on a weighting of at least one of the functional state, the environmental state, or the operator state.

Example 54 is the method of example 53, the method further including generating the demand score based on a relationship defined by a first weight multiplied by the functional state plus a second weight multiplied by the environmental state plus a third weight multiplied by the operator state.

Example 55 is the method of any one of examples 29 to 54, wherein the estimated extent of demand placed on an operator of the vehicle includes a cognitive load on operator due to the functional state of the vehicle, the environment in which the vehicle is located, or the operator state.

Example 56 is the method of any one of examples 29 to 55, wherein the estimated extent of demand placed on an operator of the vehicle is further based on a familiarity of the operator with the environment.

Example 57 is an apparatus for controlling overlay messages on a display of a vehicle. The apparatus includes a means for determining a functional state of the vehicle. The apparatus also includes a means for determining an environmental state of an environment in which the vehicle is located. The apparatus also includes a means for determining an operator state of an operator of the vehicle. The apparatus also includes a means for generating a demand score based on the functional state, the environmental state, and the operator state, wherein the demand score represents an estimated extent of demand placed on the operator of the vehicle. The apparatus also includes a means for controlling an overlay visualization scheme based on the demand score, wherein the overlay visualization scheme defines parameters for a presentation of an overlay message on the display of the vehicle.

Example 58 is the apparatus of example 57, wherein the overlay visualization scheme is further based on an estimated extent of intrusiveness to the operator of the vehicle by the presentation of the overlay message on the display within the vehicle.

Example 59 is the apparatus of example 58, the apparatus further including a means for determining the estimated extent of intrusiveness (the intrusiveness score) based on a location of the display within vehicle.

Example 60 is the apparatus of any one of examples 58 to 59, the apparatus further including a means for determining the estimated extent of intrusiveness (the intrusiveness score) based on an amount of separation between the operator and the display.

Example 61 is the apparatus of any one of examples 58 to 60, the apparatus further including a means for determining the estimated extent of intrusiveness (the intrusiveness score) based on a size parameter of the overlay visualization scheme for the presentation of the overlay message as compared to a size of the display.

Example 62 is the apparatus of any one of examples 58 to 61, the apparatus further including a means for determining the estimated extent of intrusiveness (the intrusiveness score) based on a location parameter of the overlay visualization scheme, wherein the location parameter indicates where the presentation of the overlay message is located within the display.

Example 63 is the apparatus of any one of examples 58 to 62, the apparatus further including a means for determining the estimated extent of intrusiveness (the intrusiveness score) based on a coverage parameter of the overlay visualization scheme, wherein the coverage parameter indicates what other content of the display is to be covered by the presentation of the overlay message or to what extent the other content is to be covered by the presentation of the overlay message.

Example 64 is the apparatus of any one of examples 58 to 63, the apparatus further including a means for determining the estimated extent of intrusiveness (the intrusiveness score) based on an extent to which the overlay message is to be within a field of view of the operator.

Example 65 is the apparatus of any one of examples 58 to 64, the apparatus further including a means for determining the estimated extent of intrusiveness (the intrusiveness score) based on a coverage parameter of the overlay visualization scheme, wherein the coverage parameter indicates a physical extent of coverage by the overlay message of other content of the display or indicates an extent of importance of the other content covered by the overlay message.

Example 66 is the apparatus of any one of examples 58 to 65, the apparatus further including a means for determining the parameters for the presentation of the overlay message based on a matrix of possible combinations of the parameters and their corresponding estimated intrusiveness.

Example 67 is the apparatus of example 66, the apparatus further including a means for determining the parameters for the presentation of the overlay message based on whether the corresponding estimated intrusiveness satisfies a predefined criterion.

Example 68 is the apparatus of any one of examples 66 to 67, wherein the matrix of possible combinations is a predefined matrix of parameter combinations.

Example 69 is the apparatus of any one of examples 58 to 68, wherein the predefined criterion includes an acceptable threshold level for the estimated extent of intrusiveness (the intrusiveness score).

Example 70 is the apparatus of any one of examples 58 to 69, the apparatus further including a means for determining the parameters based on a presentation criterion for the presentation of the overlay message.

Example 71 is the apparatus of example 70, wherein the presentation criterion includes a requirement of a content owner of the overlay message for the presentation of the overlay message.

Example 72 is the apparatus of example 71, wherein the overlay message includes an advertisement from the content owner.

Example 73 is the apparatus of any one of examples 58 to 72, the apparatus further includes a means for determining the parameters based on a duration of the presentation of the overlay message.

Example 74 is the apparatus of any one of examples 57 to 73, wherein the overlay message includes an advertisement.

Example 75 is the apparatus of any one of examples 57 to 74, wherein the parameters for the presentation of the overlay message include at least one of a categorical type of the overlay message, a type of content in the overlay message, a physical size of the overlay message, an opacity of the overlay message, a location within the display of the overlay message, or a sound profile associated with the overlay message.

Example 76 is the apparatus of example 75, wherein the type of content in the overlay message includes at least one of a text, a video, a static image, or an audio of the overlay message.

Example 77 is the apparatus of any one of examples 57 to 76, wherein the functional state includes at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Example 78 is the apparatus of any one of examples 57 to 77, wherein the operator state includes at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.).

Example 79 is the apparatus of any one of examples 57 to 78, wherein the environmental state includes a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Example 80 is the apparatus of any one of examples 57 to 79, the apparatus further including a means for generating the demand score based on a normalization of the functional state, the environmental state, or the operator state to a value between zero to one.

Example 81 is the apparatus of any one of examples 57 to 80, the apparatus further including a means for generating the demand score based on a weighting of at least one of the functional state, the environmental state, or the operator state.

Example 82 is the apparatus of example 81, the apparatus further including a means for generating the demand score based on a relationship defined by a first weight multiplied by the functional state plus a second weight multiplied by the environmental state plus a third weight multiplied by the operator state.

Example 83 is the apparatus of any one of examples 57 to 82, wherein the estimated extent of demand placed on an operator of the vehicle includes a cognitive load on operator due to the functional state of the vehicle, the environment in which the vehicle is located, or the operator state.

Example 84 is the apparatus of any one of examples 57 to 83, wherein the estimated extent of demand placed on an operator of the vehicle is further based on a familiarity of the operator with the environment.

Example 85 is a non-transitory computer-readable medium for controlling overlay messages on a display of a vehicle, the non-transitory computer readable medium comprising instructions that, when executed by one or more processors, cause the one or more processors to: determine a functional state of the vehicle; determine an environmental state of an environment in which the vehicle is located; determine an operator state of an operator of the vehicle; generate a demand score based on the functional state, the environmental state, and the operator state, wherein the demand score represents an estimated extent of demand placed on the operator of the vehicle; and control an overlay visualization scheme based on the demand score, wherein the overlay visualization scheme defines parameters for a presentation of an overlay message on the display of the vehicle.

Example 86 is the non-transitory computer-readable medium of example 85, wherein the overlay visualization scheme is further based on an estimated extent of intrusiveness to the operator of the vehicle by the presentation of the overlay message on the display within the vehicle.

Example 87 is the non-transitory computer-readable medium of example 86, wherein the instructions further cause the one or more processors to determine the estimated extent of intrusiveness (the intrusiveness score) based on a location of the display within vehicle.

Example 88 is the non-transitory computer-readable medium of any one of examples 86 to 87, wherein instructions further cause the one or more processors to determine the estimated extent of intrusiveness (the intrusiveness score) based on an amount of separation between the operator and the display.

Example 89 is the non-transitory computer-readable medium of any one of examples 86 to 88, wherein instructions further cause the one or more processors to determine the estimated extent of intrusiveness (the intrusiveness score) based on a size parameter of the overlay visualization scheme for the presentation of the overlay message as compared to a size of the display.

Example 90 is the non-transitory computer-readable medium of any one of examples 86 to 89, wherein instructions further cause the one or more processors to determine the estimated extent of intrusiveness (the intrusiveness score) based on a location parameter of the overlay visualization scheme, wherein the location parameter indicates where the presentation of the overlay message is located within the display.

Example 91 is the non-transitory computer-readable medium of any one of examples 86 to 90, wherein instructions further cause the one or more processors to determine the estimated extent of intrusiveness (the intrusiveness score) based on a coverage parameter of the overlay visualization scheme, wherein the coverage parameter indicates what other content of the display is to be covered by the presentation of the overlay message or to what extent the other content is to be covered by the presentation of the overlay message.

Example 92 is the non-transitory computer-readable medium of any one of examples 86 to 91, wherein instructions further cause the one or more processors to determine the estimated extent of intrusiveness (the intrusiveness score) based on an extent to which the overlay message is to be within a field of view of the operator.

Example 93 is the non-transitory computer-readable medium of any one of examples 86 to 92, wherein instructions further cause the one or more processors to determine the estimated extent of intrusiveness (the intrusiveness score) based on a coverage parameter of the overlay visualization scheme, wherein the coverage parameter indicates a physical extent of coverage by the overlay message of other content of the display or indicates an extent of importance of the other content covered by the overlay message.

Example 94 is the non-transitory computer-readable medium of any one of examples 86 to 93, wherein the processor is further configured to determine the parameters for the presentation of the overlay message based on a matrix of possible combinations of the parameters and their corresponding estimated intrusiveness.

Example 95 is the non-transitory computer-readable medium of example 94, wherein the processor is further configured to determine the parameters for the presentation of the overlay message based on whether the corresponding estimated intrusiveness satisfies a predefined criterion.

Example 96 is the non-transitory computer-readable medium of any one of examples 94 to 95, wherein the matrix of possible combinations is a predefined matrix of parameter combinations.

Example 97 is the non-transitory computer-readable medium of any one of examples 86 to 96, wherein the predefined criterion includes an acceptable threshold level for the estimated extent of intrusiveness (the intrusiveness score).

Example 98 is the non-transitory computer-readable medium of any one of examples 86 to 97, wherein the processor is further configured to determine the parameters based on a presentation criterion for the presentation of the overlay message.

Example 99 is the non-transitory computer-readable medium of example 98, wherein the presentation criterion includes a requirement of a content owner of the overlay message for the presentation of the overlay message.

Example 100 is the non-transitory computer-readable medium of example 99, wherein the overlay message includes an advertisement from the content owner.

Example 101 is the non-transitory computer-readable medium of any one of examples 86 to 100, wherein the instructions further cause the one or more processors to determine the parameters based on a duration of the presentation of the overlay message.

Example 102 is the non-transitory computer-readable medium of any one of examples 85 to 101, wherein the overlay message includes an advertisement.

Example 103 is the non-transitory computer-readable medium of any one of examples 85 to 102, wherein the parameters for the presentation of the overlay message include at least one of a categorical type of the overlay message, a type of content in the overlay message, a physical size of the overlay message, an opacity of the overlay message, a location within the display of the overlay message, or a sound profile associated with the overlay message.

Example 104 is the non-transitory computer-readable medium of example 103, wherein the type of content in the overlay message includes at least one of a text, a video, a static image, or an audio of the overlay message.

Example 105 is the non-transitory computer-readable medium of any one of examples 85 to 104, wherein the functional state includes at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Example 106 is the non-transitory computer-readable medium of any one of examples 85 to 105, wherein the operator state includes at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.).

Example 107 is the non-transitory computer-readable medium of any one of examples 85 to 106, wherein the environmental state includes a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Example 108 is the non-transitory computer-readable medium of any one of examples 85 to 107, wherein instructions further cause the one or more processors to generate the demand score based on a normalization of the functional state, the environmental state, or the operator state to a value between zero to one.

Example 109 is the non-transitory computer-readable medium of any one of examples 85 to 108, wherein instructions further cause the one or more processors to generate the demand score based on a weighting of at least one of the functional state, the environmental state, or the operator state.

Example 110 is the non-transitory computer-readable medium of example 109, wherein instructions further cause the one or more processors to generate the demand score based on a relationship defined by a first weight multiplied by the functional state plus a second weight multiplied by the environmental state plus a third weight multiplied by the operator state.

Example 111 is the non-transitory computer-readable medium of any one of examples 85 to 110, wherein the estimated extent of demand placed on an operator of the vehicle includes a cognitive load on operator due to the functional state of the vehicle, the environment in which the vehicle is located, or the operator state.

Example 112 is the non-transitory computer-readable medium of any one of examples 85 to 111, wherein the estimated extent of demand placed on an operator of the vehicle is further based on a familiarity of the operator with the environment.

Example 113 is a system for controlling overlay messages on a display of a vehicle. The system includes a demand scoring circuit that is configured to determine a functional state of the vehicle; determine an environmental state of an environment in which the vehicle is located; determine an operator state of an operator of the vehicle; and generate a demand score based on the functional state, the environmental state, and the operator state, wherein the demand score represents an estimated extent of demand placed on the operator of the vehicle. The system also includes an overlay visualization circuit in communication with the demand scoring circuit, wherein the overlay visualization circuit is configured to control an overlay visualization scheme that defines parameters for a presentation of an overlay message on the display of the vehicle, wherein the overlay visualization circuit is configured to determine the overlay visualization scheme based on the demand score.

Example 114 is the system of example 113, wherein the system further includes an intrusiveness scoring circuit in communication with the overlay visualization circuit, wherein the intrusiveness scoring circuit is configured to determine an intrusiveness score that represents an estimated extent of intrusiveness to the operator of the vehicle by the presentation of the overlay message on the display within the vehicle, wherein the overlay visualization scheme is further based on the intrusiveness score.

Example 115 is the system of example 114, wherein the intrusiveness scoring circuit is configured to determine the estimated extent of intrusiveness (the intrusiveness score) based on a location of the display within vehicle.

Example 116 is the system of any one of examples 114 to 115, wherein the intrusiveness scoring circuit is configured to determine the estimated extent of intrusiveness (the intrusiveness score) based on an amount of separation between the operator and the display.

Example 117 is the system of any one of examples 114 to 116, wherein the intrusiveness scoring circuit is configured to determine the estimated extent of intrusiveness (the intrusiveness score) based on a size parameter of the overlay visualization scheme for the presentation of the overlay message as compared to a size of the display.

Example 118 is the system of any one of examples 114 to 117, wherein the intrusiveness scoring circuit is configured to determine the estimated extent of intrusiveness (the intrusiveness score) based on a location parameter of the overlay visualization scheme, wherein the location parameter indicates where the presentation of the overlay message is located within the display.

Example 119 is the system of any one of examples 114 to 118, wherein the intrusiveness scoring circuit is configured to determine the estimated extent of intrusiveness (the intrusiveness score) based on a coverage parameter of the overlay visualization scheme, wherein the coverage parameter indicates what other content of the display is to be covered by the presentation of the overlay message or to what extent the other content is to be covered by the presentation of the overlay message.

Example 120 is the system of any one of examples 114 to 119, wherein the intrusiveness scoring circuit is configured to determine the estimated extent of intrusiveness (the intrusiveness score) based on an extent to which the overlay message is to be within a field of view of the operator.

Example 121 is the system of any one of examples 114 to 120, wherein the intrusiveness scoring circuit is configured to determine the estimated extent of intrusiveness (the intrusiveness score) based on a coverage parameter of the overlay visualization scheme, wherein the coverage parameter indicates a physical extent of coverage by the overlay message of other content of the display or indicates an extent of importance of the other content covered by the overlay message.

Example 122 is the system of any one of examples 114 to 121, wherein the overlay visualization circuit is further configured to determine the parameters for the presentation of the overlay message based on a matrix of possible combinations of the parameters and their corresponding estimated intrusiveness.

Example 123 is the system of example 122, wherein the overlay visualization circuit is further configured to determine the parameters for the presentation of the overlay message based on whether the corresponding estimated intrusiveness satisfies a predefined criterion.

Example 124 is the system of any one of examples 122 to 123, wherein the matrix of possible combinations is a predefined matrix of parameter combinations.

Example 125 is the system of any one of examples 114 to 124, wherein the predefined criterion includes an acceptable threshold level for the estimated extent of intrusiveness (the intrusiveness score).

Example 126 is the system of any one of examples 114 to 125, wherein the overlay visualization circuit is further configured to determine the parameters based on a presentation criterion for the presentation of the overlay message.

Example 127 is the system of example 126, wherein the presentation criterion includes a requirement of a content owner of the overlay message for the presentation of the overlay message.

Example 128 is the system of example 127, wherein the overlay message includes an advertisement from the content owner.

Example 129 is the system of any one of examples 114 to 128, wherein the overlay visualization circuit is further configured to determine the parameters based on a duration of the presentation of the overlay message.

Example 130 is the system of any one of examples 113 to 129, wherein the overlay message includes an advertisement.

Example 131 is the system of any one of examples 113 to 130, wherein the parameters for the presentation of the overlay message include at least one of a categorical type of the overlay message, a type of content in the overlay message, a physical size of the overlay message, an opacity of the overlay message, a location within the display of the overlay message, or a sound profile associated with the overlay message.

Example 132 is the system of example 131, wherein the type of content in the overlay message includes at least one of a text, a video, a static image, or an audio of the overlay message.

Example 133 is the system of any one of examples 113 to 132, wherein the functional state includes at least one of a speed of the vehicle or an indication of whether the vehicle is in motion (e.g., currently driving, parked at a charging station, stopped at a red light, etc.), an acceleration of the vehicle, a pose of the vehicle, or a level of operational autonomy of the vehicle (e.g., SAE levels 1, 2, 3, 4, 5, etc.).

Example 134 is the system of any one of examples 113 to 133, wherein the operator state includes at least one of an estimated attention level of the operator to the functional state of the vehicle, an estimated stress level of the operator, an estimated fatigue of the operator, or a driving profile of the operator (e.g., past actions in a historical profile or static information such as age, illnesses, habits, etc.).

Example 135 is the system of any one of examples 113 to 134, wherein the environmental state includes a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.

Example 136 is the system of any one of examples 113 to 135, wherein the demand scoring circuit is configured to generate the demand score based on a normalization of the functional state, the environmental state, or the operator state to a value between zero to one.

Example 137 is the system of any one of examples 113 to 136, wherein the demand scoring circuit is configured to generate the demand score based on a weighting of at least one of the functional state, the environmental state, or the operator state.

Example 138 is the system of example 137, wherein the demand scoring circuit is configured to generate the demand score based on a relationship defined by a first weight multiplied by the functional state plus a second weight multiplied by the environmental state plus a third weight multiplied by the operator state.

Example 139 is the system of any one of examples 113 to 138, wherein the estimated extent of demand placed on an operator of the vehicle includes a cognitive load on operator due to the functional state of the vehicle, the environment in which the vehicle is located, or the operator state.

Example 140 is the system of any one of examples 113 to 139, wherein the estimated extent of demand placed on an operator of the vehicle is further based on a familiarity of the operator with the environment.

While the above has been particularly shown and described with reference to specific aspects, it should be understood by those skilled in the art that various modifications in form and detail may be made thereto without departing from the spirit and scope thereof, and all modifications, which come within the scope and meaning of equivalency, are intended to be embraced.

## Claims

1. An apparatus for controlling overlay messages on a display of a vehicle, the apparatus comprising:
a memory comprising instructions stored thereon; and
a processor that, based on execution of the instructions, is configured to:
determine a functional state of the vehicle;
determine an environmental state of an environment in which the vehicle is located;
determine an operator state of an operator of the vehicle;
generate a demand score based on the functional state, the environmental state, and the operator state, wherein the demand score represents an estimated extent of demand placed on the operator of the vehicle; and
control an overlay visualization scheme based on the demand score, wherein the overlay visualization scheme defines parameters for a presentation of an overlay message on the display of the vehicle.

2. The apparatus of claim 1, wherein the overlay visualization scheme is further based on an estimated extent of intrusiveness to the operator of the vehicle by the presentation of the overlay message on the display within the vehicle.

3. The apparatus of claim 2, wherein the processor is configured to determine the estimated extent of intrusiveness based on at least one of: a location of the display within vehicle; an amount of separation between the operator and the display; a size parameter of the overlay visualization scheme for the presentation of the overlay message as compared to a size of the display; a duration of the presentation of the overlay message; a location parameter of the overlay visualization scheme, wherein the location parameter indicates where the presentation of the overlay message is located within the display; a coverage parameter of the overlay visualization scheme, wherein the coverage parameter indicates what other content of the display is to be covered by the presentation of the overlay message or to what extent the other content is to be covered by the presentation of the overlay message; an extent to which the overlay message is to be within a field of view of the operator; or a coverage parameter of the overlay visualization scheme, wherein the coverage parameter indicates a physical extent of coverage by the overlay message of other content of the display or indicates an extent of importance of the other content covered by the overlay message.

4. The apparatus of any one of claims 2 to 3, wherein the processor is further configured to determine the parameters for the presentation of the overlay message based on a matrix of possible combinations of the parameters and their corresponding estimated intrusiveness.

5. The apparatus of claim 4, wherein the processor is further configured to determine the parameters for the presentation of the overlay message based on whether the corresponding estimated intrusiveness satisfies a predefined criterion.

6. The apparatus of any one of claims 4 to 5, wherein the matrix of possible combinations is a predefined matrix of parameter combinations.

7. The apparatus of any one of claims 5 to 6, wherein the predefined criterion comprises an acceptable threshold level for the estimated extent of intrusiveness.

8. The apparatus of any one of claims 1 to 7, wherein the processor is further configured to determine the parameters based on a presentation criterion for the presentation of the overlay message.

9. The apparatus of claim 8, wherein the presentation criterion comprises a requirement of a content owner of the overlay message for the presentation of the overlay message.

10. The apparatus of claim 9, wherein the overlay message comprises an advertisement of the content owner.

11. The apparatus of any one of claims 1 to 10, wherein the parameters for the presentation of the overlay message comprise at least one of a categorical type of the overlay message, a type of content in the overlay message, a physical size of the overlay message, an opacity of the overlay message, a location within the display of the overlay message, or a sound profile associated with the overlay message.

12. The apparatus of claim 11, wherein the type of content in the overlay message comprises at least one of a text, a video, a static image, or an audio of the overlay message.

13. The apparatus of any one of claims 1 to 12, wherein the functional state comprises at least one of a speed of the vehicle or an indication of whether the vehicle is in motion, an acceleration of the vehicle, a pose of the vehicle, or a level of operational autonomy of the vehicle.

14. The apparatus of any one of claims 1 to 13, wherein the operator state comprises at least one of an estimated attention level of the operator to the functional state of the vehicle, an estimated stress level of the operator, an estimated fatigue of the operator, or a driving profile of the operator.

15. The apparatus of any one of claims 1 to 14, wherein the environmental state comprises a road condition of a road on which the vehicle is located or is expected to be located, a whether condition in which the vehicle is located or is expected to be located, a traffic situation in which the vehicle is located or is expected to be located, a road geometry of the road on which the vehicle is located or is expected to be located, a geographic location in which the vehicle is located or is expected to be located, or a collision risk associated with the vehicle.
